# EUROPEAN PATENT APPLICATION

(11) **EP 3 257 609 A2**
(43) Date of publication of application: **20.12.2017**
(21) Application number: 17171348.0
(22) Date of filing: 16.05.2017
(51) Int. Cl.: B22F 3/105, B22F 5/00, F01D 11/08

(54) **A SEMI-ANNULAR COMPONENT AND METHOD OF MANUFACTURE**

(30) Priority: 14.06.2016 GB 201610309
(71) Applicant: Rolls-Royce plc, London SW1E 6AT (GB)
(72) Inventor: Rammohan, Siddharth, Derby, Derbyshire DE24 8BJ (GB); Jones, Simon, Derby, Derbyshire DE24 8BJ (GB)
(74) Representative: Rolls-Royce plc

(57) **Abstract**

There is disclosed a method of manufacturing a semi-annular component 60 for a casing arrangement of a gas turbine by additive manufacture, the component having a lattice structure 84 and extending circumferentially about a central axis 11 so that a radial direction extends towards the central axis 11. The method comprises: fusing material at successive build locations along a build direction 98 to progressively form the component 60 so that members 86 of the lattice structure 84 have an elongate direction having a circumferential component; wherein the build direction 98 lies in a plane substantially normal to the central axis; and wherein the build direction 98 is inclined with respect to the radial direction at each build location so that members 86 of the lattice structure 84 are progressively formed along their elongate direction. A semi-annular component including a seal carrier is also disclosed.

## Description

The present disclosure concerns a method of manufacturing a semi-annular component having a lattice structure, and a semi-annular component having such a lattice structure, in particular a seal carrier for a gas turbine engine.

A seal carrier is an example of a semi-annular component for a gas turbine which is typically cast and finished by machining. Casting and machining may be a relatively inexpensive method for producing high strength and accurate parts. Whilst casting typically requires a minimum component thickness, machining can be used to remove excess material for weight reduction. One consideration in the design of machined components is therefore the access for machining tools.

In this context, "semi-annular" is to be understood to refer to any section of an annulus, for example (but without limitation) a half annulus, quarter annulus, a tenth annulus or a three-fifth annulus. Furthermore the curvature need not be strictly in line with the circumference of a circle but is a close approximation thereto.

Seal carriers typically have both structural and thermal functionality. Structurally, seal carriers may be configured to transfer tangential and axial loads from aerodynamic components, such as a high pressure guide vane. Thermally, seal carriers may be configured to insulate radially outer casing components from a hot annular gas flow of the gas turbine, and configured to suspend a seal segment from such radially outer casing components so as to accommodate thermal expansion and aid in transferring axial, radial and tangential loads from the seal segment to the outer casing.

According to a first aspect of the disclosure there is provided a method of manufacturing a semi-annular component for a casing arrangement of a gas turbine by additive manufacture, the component having a lattice structure and, in use, extending circumferentially about a central axis of the gas turbine so that a radial direction extends towards the central axis, the method comprising: fusing material at successive build locations along a build direction to progressively form the component so that members of the lattice structure have an elongate direction having a circumferential component; wherein the build direction lies in a plane substantially normal to the central axis; and wherein the build direction is inclined with respect to the radial direction at each build location so that members of the lattice structure are progressively formed along their elongate direction.

A member of the lattice structure may be progressively formed along its elongate direction when the formation of the respective member begins at a first node of the member and progresses along the elongate direction towards the other node.

The build direction may be inclined with respect to the radial direction by an angle of between 35° and 110°, or between 45° and 90°. The elongate direction of each of the members of the lattice structure corresponds with the direction of the maximum dimension of each member (i.e. the length, where the length is greater than the width or height). The build direction as projected onto a plane normal the central axis may be inclined with respect to the radial direction by an angle of between 35° and 110°.

The semi-annular component may be formed by selective deposition additive manufacture such as direct laser deposition (DLD), direct metal deposition (DMD) and laser metal deposition (LMD). The process of fusing material may comprise selectively melting a surface of a metal substrate using a radiation source to form a melt pool on the surface and selectively depositing metal powder into the melt pool to progressively form the component.

The build direction may be substantially vertical and configured or oriented with respect to the component or the coordinate system for the component so that the members of the lattice structure are inclined with respect to the vertical axis by no more than 30°. Accordingly, the lattice structure may be self-supporting as it is being manufactured. Self-supporting in this case means that the lattice does not require ancillary support structures to be built into the semi-annular component which are to be machined off after additive manufacture. Therefore, the part can be manufactured to its final shape without the need for machining.

The members of the lattice structure may be arranged in a quadrilateral configuration to define quadrilateral interstices. A diagonal of each quadrilaterial interstice may be aligned with the circumferential direction.

The semi-annular component may be a seal carrier in accordance with the second aspect described below.

According to second aspect of the disclosure there is provided a seal carrier for a casing arrangement of a gas turbine engine comprising a casing structure and a shroud seal segment, the seal carrier comprising: a casing attachment point for coupling the seal carrier with a casing structure; a carrier arm configured to extend radially inwardly from the casing structure to support a shroud seal segment; wherein the casing attachment point is axially spaced apart from the carrier arm; and a semi-annular lattice structure extending between the casing attachment point and the carrier arm, the lattice structure comprising a plurality of elongate members each extending along a respective elongate direction having a circumferential component. The shroud seal segment may depend from the seal carrier and be configured to minimise the clearance between the casing structure and the tips of turbine blades of the intermediate or high pressure turbines in order to increase the efficiency of the engine.

The seal carrier may further comprise a radially outer barrier plate for insulating the casing from an axial gas flow through the seal carrier. The axial gas flow may affect the clearance between the shroud seal segment and the tips of the high pressure turbine blades due to the casing structure expanding or contracting with temperature changes and therefore pushing the shroud seal segments towards the tips of the blades or pulling the shroud seal segment away from the tips of the blades. Therefore, careful control of the temperature at the casing structure can optimise the clearance and is achieved through the use of the barrier plate.

The barrier plate may comprise a plurality of openings to allow a gas flow through the seal carrier to the casing. At least one opening may be elliptical (or at least partly elliptical) with a minimum aspect ratio of 2:1, wherein the major axis of each elliptical opening is in the circumferential direction of the seal carrier. Alternatively or additionally, at least one opening may be quadrilateral, wherein a diagonal of the quadrilateral is substantially aligned with the circumferential direction. The edges of the quadrilateral may be inclined with respect to the circumferential direction by no more than 30°. The openings may also be a mixture of elliptical and quadrilateral openings as described. The openings may be provided for selectively allowing a gas flow through the seal carrier to the casing, for example, under the action of a pump to draw gas flow through the openings to selectively heat the casing.

Each opening may be at least partly defined by an overhanging boundary which overhangs the opening with respect to the build direction (e.g. an upper boundary). There may be an opposing supported boundary. When the build direction is vertical, an overhanging boundary may comprise any portion of the boundary defining a respective opening that faces at least partly downwardly (i.e. the normal direction with respect to the boundary has a downward component). The overhanging boundary may form part of an ellipse, for example an ellipse having a minimum aspect ratio of 2:1 wherein the major axis of the ellipse is in the circumferential direction. An opposing supported boundary may be non-elliptical, for example circular or simply linear (e.g. horizontal). Accordingly, the opening may be teardrop shaped, with portions of an overhanging boundary of the opening being more inclined towards the vertical than opposing portions of the supported opening. In other examples, an opening may have an overhanging boundary in the form of two sides inclined by no more than 60° (for example no more than 55° or no more than 45°) from the vertical. For example, the opening may be triangular with a horizontal supported boundary and two sides forming the overhanging boundary.

The casing attachment point may be an intermediate casing attachment point disposed between a forward and an aft portion of the barrier plate, or alternatively, the seal carrier may additionally comprise such an intermediate casing attachment point.

The barrier plate may comprise a continuous portion circumferentially adjacent to the intermediate casing attachment point, the continuous portion may extend between the forward and aft portions and may have a substantially constant radius.

The members of the lattice structure may be arranged in a quadrilateral configuration to define quadrilateral interstices, for example square or rhombic.

The seal carrier may be manufactured by a method in accordance with the first aspect of the invention.

According to a third aspect of the disclosure there is provided a casing arrangement for a gas turbine engine comprising: a casing structure, a shroud seal segment and a seal carrier according to the second aspect; the casing structure having a carrier attachment point cooperating with the intermediate casing attachment point of the seal carrier so that the seal carrier depends from the casing structure; and a recess in the barrier plate of the seal carrier for accommodating the carrier attachment point of the casing. The axial extent of the recess may be no more than 130% of the axial extent of the carrier attachment point of the casing. The casing arrangement may provide a gas path seal between the shroud seal segment and the tips of turbine blades, for example in the intermediate or high pressure turbine, in order to maximise the energy extracted from an annular gas flow through the gas turbine.

The carrier attachment point of the casing and intermediate casing attachment point of the seal carrier may comprise projections configured to interlock with one another.

The recess may be circumferentially adjacent the continuous portion and the casing arrangement may comprise a plurality of seal carriers; wherein the barrier plates of the plurality of seal carriers are arranged so that there is an alternating arrangement of continuous portions and recesses when assembled.

The intermediate casing attachment point may extend radially outwardly from the barrier plate.

Embodiments will now be described by way of example only, with reference to the Figures, in which:
Figure 1 is a schematic sectional side view of a gas turbine engine;
Figure 2 is a schematic cross-sectional view of a casing arrangement at the high pressure turbine of a gas turbine engine;
Figure 3 is a schematic cross-sectional view of a previously considered seal carrier with a barrier plate;
Figure 4 is a schematic cross-sectional view of a further seal carrier;
Figure 5 is a schematic radially-outer view of the outside of the seal carrier of Figure 4;
Figure 6 is a schematic perspective view of the seal carrier of Figures 4 and 5;
Figures 7A and 7B schematically illustrate a partially-formed seal carrier according to Figures 4-6 during additive manufacturing;
Figure 8 schematically illustrates a partially-formed seal carrier according to Figures 4-6 in a further configuration during additive manufacture;
Figure 9 is a flow chart showing the steps for producing the seal carrier of Figures 4-6 by additive manufacturing.

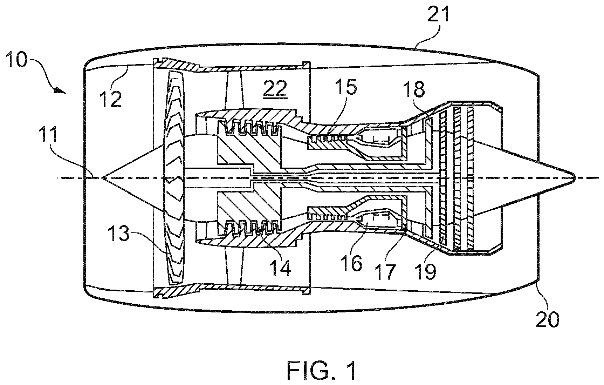

With reference to Figure 1, an example gas turbine engine is generally indicated at 10, having a central (also referred to as a principal) and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

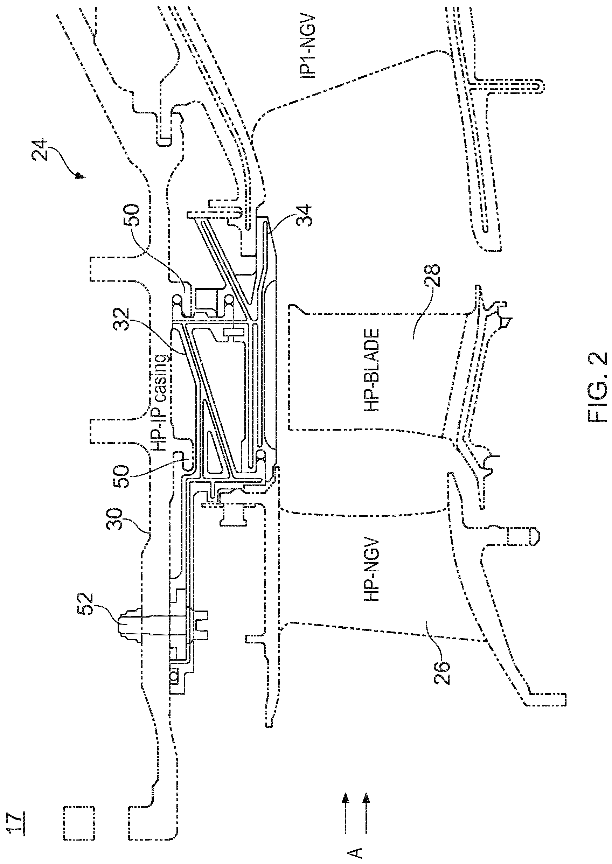

Figure 2 schematically shows a portion of an example high pressure turbine 17 of the gas turbine engine 10 in cross section. The high pressure turbine 17 comprises a casing arrangement 24 and a high pressure nozzle guide vane 26 and high pressure turbine blades 28 radially within the casing arrangement 24. The hot gas flow from the combustion equipment stage 16 enters the high pressure turbine 17 in the direction of the arrows A. The gas flow is expanded past the high pressure nozzle guide vanes 26 to increase the circumferential velocity of the gas flow and thereby drive the high pressure turbine blades 28 in rotation.

The casing arrangement 24 of the high pressure turbine 17 comprises an annular casing structure 30, a plurality of seal carriers 32 and a plurality of shroud seal segments 34 which partly define the radially-outer gas-washed surface for flow through the high pressure turbine 17. Each seal carrier 32 is semi-annular and the plurality of seal carriers 32 are assembled to form an annular seal carrier 32 which is located radially inward of the casing structure 30 and attached to the casing structure 30. In this particular example, there are twenty seal carriers each having an angular extent of 18 degrees. Each shroud seal segment 34 is semi-annular and the plurality of shroud seal segments 34 are assembled to form an annular shroud seal segment 34 which is located radially inward of the casing structure 30 and the seal carrier 32, and which depends from the seal carrier 32. In this particular example, a shroud seal segment 34 is provided for each seal carrier 32, and has the same angular extent as the seal carrier 32. The seal carriers 32 and shroud seal segments 34 extend circumferentially around a central axis which in this example is common with (coaxial with) the central axis 11 of the gas turbine 10.

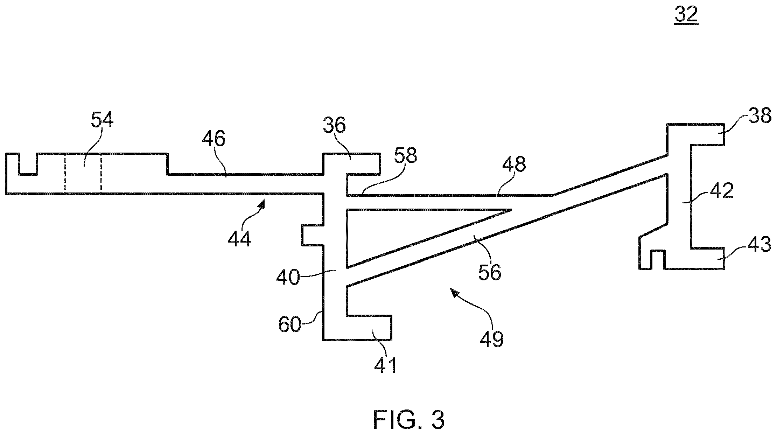

The casing arrangement 24 of Figure 2 is shown with a previously considered example of a seal carrier 32 which will be described with reference to Figure 3. Figure 3 shows a cross section of the seal carrier 32 in a plane extending through the central axis 11. The seal carrier 32 comprises an intermediate casing attachment point 36, an aft casing attachment point 38, an intermediate carrier arm 40, an aft carrier arm 42 and a barrier plate 44 comprising a forward portion 46 and an aft portion 48.

The barrier plate 44 is semi-annular and comprises a forward portion 46 having a first radius and an aft portion 48 having a second smaller radius, with a step-change or shoulder 58 therebetween. The step-change corresponds to the location of an intermediate casing attachment point 36. The aft portion 48 of the barrier plate 44 forms part of an aft support structure 49 having a generally triangular configuration, as will be described in detail below.

The intermediate casing attachment point 36 and the aft casing attachment point 38 are axially spaced apart and are in the form of hooks which protrude radially outwardly from the barrier plate 44 and aft support structure 49 respectively. The hooks 36, 38 extend axially rearwardly to couple with complimentary hooks 50 on the casing structure 30 (which may be referred to as carrier attachment points of the casing), to thereby attach the seal carrier 32 to the casing structure 30. The seal carrier 32 also comprises a bolt hole 54 in the forward portion of the barrier plate 46 for coupling to the casing structure 30 with a bolt 52 (see Figure 2).

The intermediate carrier arm 40 and aft carrier arm 42 extend radially inwardly from the intermediate casing attachment point 36 and the aft casing attachment point 38 respectively. At the radially inner end of each carrier arm 40, 42 there is provided a respective seal attachment point 41, 43, which in this example are in the form of axially extending hooks to which the shroud seal segment 34 can be attached.

A stiffening member 56 extends radially and axially (i.e. at an angle inclined with respect to the axial direction) from a location on the intermediate carrier arm 40 towards (i.e. near to) the intermediate seal attachment point 41 to a location on the aft carrier arm 42 towards (i.e. near to) the aft casing attachment point 38, and thereby is substantially conical. In this example, the intermediate carrier arm 40, the aft portion of the barrier plate 44 and the stiffening member 56 form the substantially triangular aft support structure 49.

As best shown in Figure 2, in the assembled casing arrangement the high pressure nozzle guide vanes 26 abut a circumferentially and radially extending forward surface 60 of the intermediate carrier arm 40 to exert tangential and axial forces on the intermediate carrier arm 40.

The example seal carrier 32 is cast and machined. The design of the example seal carrier 32 is partly informed by particular limitations of the casting process. For example, the minimum wall thickness of the stiffening member 56 when casting is relatively high and may therefore add unnecessary weight to the seal carrier 32.

The barrier plate 44 is configured to insulate the casing structure 30 from the hot gas flowing through the seal carrier. Openings (not shown) in the barrier plate 44 provide a path for the hot gas to be drawn through to the casing structure 30 by a pump (not shown) to control the temperature at the casing structure 30, for example as described in US Patent Publication No. US 2001/0229306. The closer the barrier plate 44 is to the casing structure 30, the more accurately and efficiently the temperature at the casing structure 30 can be controlled.

However, as best shown in Figure 2, the forward portion 46 of the barrier plate 44 is radially closer to the casing structure 30 than the aft portion 48 of the barrier plate 44 due to the step change or shoulder 58 between the forward portion 46 and the aft portion 48 where the radius of the barrier plate 44 is reduced. The reduced radius of the barrier plate 44 at this location allows for insertion of the carrier attachment point 50 of the casing under the intermediate casing attachment point 36 of the seal carrier 32. Whilst the carrier attachment point 50 of the casing is of limited axial extent, the axial extent of the aft portion 48 at the reduced radius is significantly greater in order to allow for access of machining tools below the intermediate casing attachment point after casting. Machining is done to ensure the accurate geometry of the part and proper interfacing between the intermediate casing attachment point 36 and the corresponding carrier attachment point 50 of the casing structure.

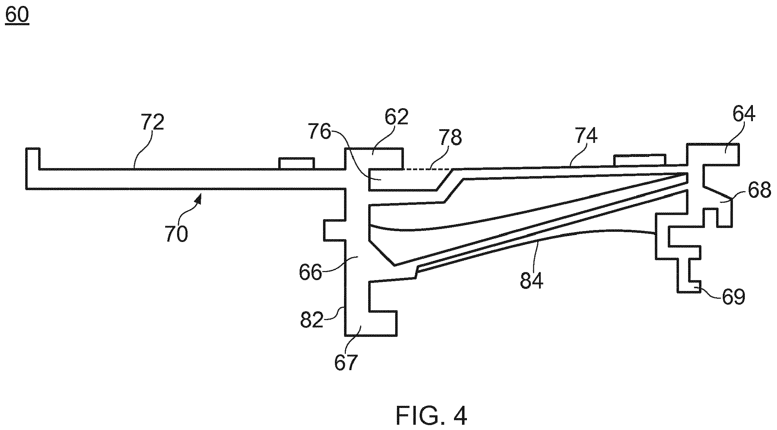

A further example of a seal carrier will now be described with reference to Figures 4-6. In this particular example, the seal carrier 60 is interchangeable with the seal carrier 32 described above, and may be incorporated in the gas turbine engine 10 described above with respect to Figure 1, and in the casing arrangement described above with respect to Figure 2.

The example seal carrier 60 is manufactured by additive manufacture, and more particularly by selective deposition additive manufacture such as direct laser deposition (DLD), also known as direct metal deposition (DMD) or laser metal deposition (LMD), as will be described in detail below.

Figure 4 shows a cross section of the seal carrier 60 in a plane extending through the central axis 11. The seal carrier 60 comprises an intermediate casing attachment point 62, an aft casing attachment point 64, an intermediate carrier arm 66, an aft carrier arm 68 and a barrier plate 70 comprising a forward portion 72 and an aft portion 74.

The overall arrangement of the seal carrier 60 is similar to that described above with respect to the seal carrier 32 of the previously considered example except as follows. In particular, the intermediate casing attachment point 62 of the seal carrier 60 is disposed between the forward portion 72 and the aft portion 74 of the barrier plate 70, whereas the aft casing attachment point 64 is disposed at the aft end of the aft portion 74 of the barrier plate.

The intermediate casing attachment point 62 and the aft casing attachment point 64 are therefore axially spaced apart and are in the form of hooks which protrude radially outwardly from the barrier plate 70 and extend axially rearwardly to couple with corresponding hooks 50 (or carrier attachment points) of the casing structure 30, to thereby attach the seal carrier 60 to the casing structure 30.

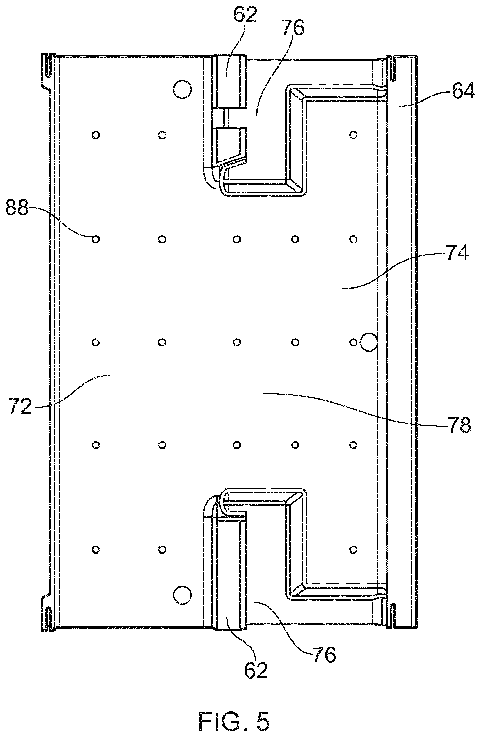

As best shown in Figure 5, in this example the seal carrier 60 has two intermediate casing attachment points 62 angularly spaced apart, each one being at a respective angular end of the seal carrier. The barrier plate 70 comprises recesses 76 at locations corresponding to the intermediate casing attachment points 62, and an angularly-adjacent continuous portion 78 therebetween. The continuous portion 78 axially extends from the forward portion 72 to the aft portion 74 at a substantially constant radius.

As shown in Figure 5, the recesses 76 have an angular extent which substantially corresponds to the angular extent of the corresponding intermediate casing attachment point 62. Further, over at least an angular portion of the barrier plate 70, the recess 76 is of limited axial extent so that the aft portion 74 of the barrier plate returns to the same radius as the forward portion of the barrier plate downstream of the recess 76. In particular, the axial extent of at least a portion of the recess 76 is no more than 130% of the axial extent of the carrier attachment point 50 of the casing structure. In the particular example shown, the axial extent of the carrier attachment point 50 is approximately 7.5mm, whereas portions of the recess 76 have an axial extent of between 8mm and 10mm. In contrast, in the previously considered example seal carrier 32 described above, the axial extent of the aft portion 48 of the barrier plate 44 rearwardly of the step change 58 that is provided to accommodate a carrier attachment point 50 of the same dimension (7.5mm) is approximately 22mm.

Since the continuous portions 78 are angularly (or circumferentially) adjacent to the recesses 76, when the plurality of seal carriers 60 are assembled into an annular seal carrier, the barrier plates of the seal carriers 60 are arranged so that there is an alternating arrangement of continuous portions 78 and recesses 76 in the barrier plates 70.

The intermediate carrier arm 66 and aft carrier arm 68 are in the form of radially inwardly protruding arms as described above, and are each provided with a respective seal attachment point 67, 69 at their radially inner ends to which a shroud seal segment can be attached.

A forward surface 82 of the intermediate carrier arm 66 is configured to abut with the high pressure nozzle guide vane 26, and to receive axial and tangential loading from the high pressure nozzle guide vane 26, as described above.

A stiffening member in the form of an annular lattice structure 84 extends between a location on the intermediate carrier arm 66 towards the intermediate seal attachment point 67 and a portion on the intermediate carrier arm towards the aft casing attachment point 64, thereby provide reinforcement for the intermediate carrier arm 66 against the axial load from the high pressure nozzle guide vanes 26. The lattice structure 84 therefore extends between the intermediate carrier arm 66 and the aft casing attachment point 64, via the aft carrier arm 68. In other examples, the lattice structure 84 may extend substantially directly to the aft casing attachment point 64.

The lattice structure 84 comprises an arrangement of members 86 defining quadrilateral interstices. In this particular example, the angle between the lattices members is 90°, but in other examples the lattice members may define other shapes, such as rhombi having a greater circumferential extent than axial extent. Further, in this particular example one of the diagonals of each of the interstices extends in the circumferential direction of the seal carrier 60.

The applicant has found that the lattice structure 84 results in significant weight savings as compared with the stiffening member 56 of the seal carrier 32, since additive manufacturing can produce the lattice according to the structural requirements and without the limitations of a minimum wall thickness as required for casting. Further, whilst it may be possible to remove some material from a cast part using machining, access requirements may hinder any such machining step.

Further, the recesses 76 under the intermediate casing attachment point 62 are smaller than in the previously considered example seal carrier 32, in particular since there is no requirement to provide machining access under the casing attachment point 62. As such, a region of the aft portion 74 of the barrier plate 70 downstream of the recess 76 is at the same radius as the forward portion 72 of the barrier plate 70. Accordingly, in use, the temperature at the casing structure 30 may be controlled more accurately and evenly over the length of the seal carrier 60.

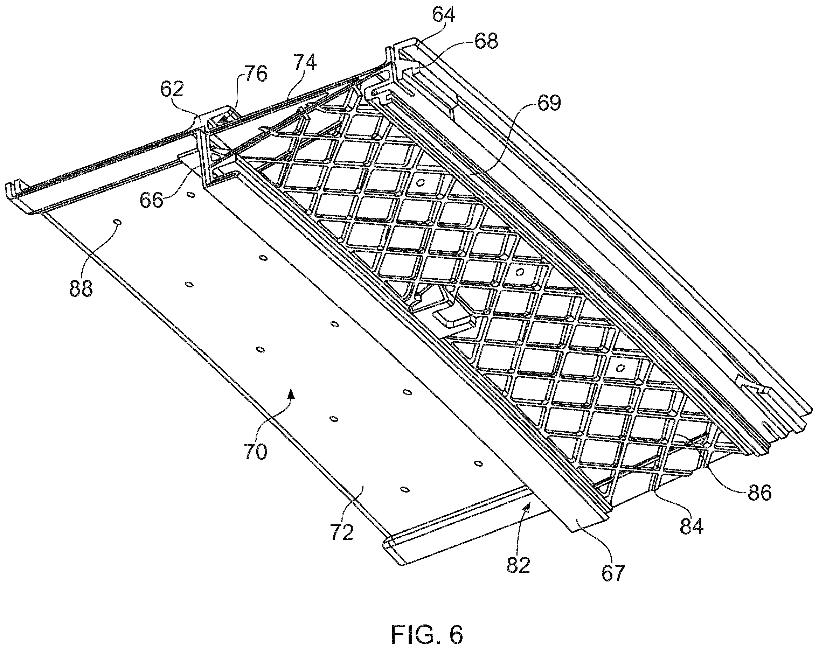

In order to accommodate the control of the temperature at the casing structure 30, the barrier plate 70 comprises openings 88. In one example of a seal carrier as shown in Figures 5 and 6, these openings 88 are elliptical (with the major axis of each opening 88 extending in the circumferential direction). In an alternative example, the openings may be quadrilateral with a diagonal axis of each quadrilateral opening being in the circumferential direction. Otherwise, the holes may be a mixture of elliptical or quadrilateral openings. In other examples the openings may be of other shapes, each opening having an upper boundary (or overhanging boundary, defined with respect to the build direction) partly defining the opening and having an overhang angle of no more than 60 degrees from the vertical.

The seal carrier 60 described above with reference to Figures 4-6 is manufactured using selective deposition additive manufacture.

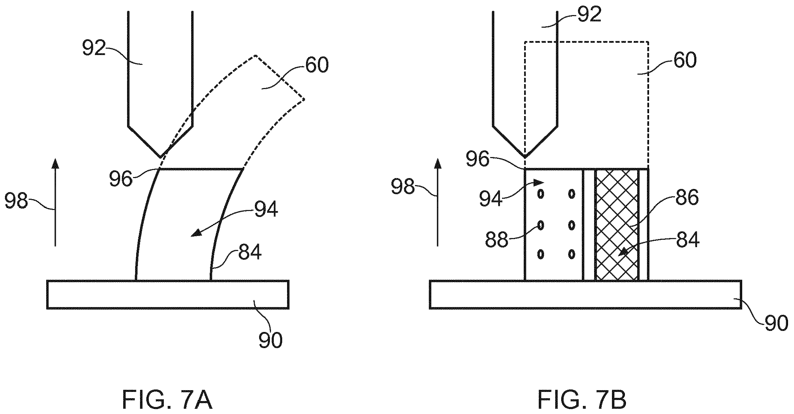

A method of manufacturing a semi-annular component with a lattice structure will now be described with reference to Figures 7-9. It will be appreciated that the method of manufacturing may be applicable to a wide range of different semi-annular components, and is not limited to the manufacture of a seal carrier as described above. Nevertheless, the method will be described, by way of example only, with respect to manufacture of the example seal carrier 60 described with respect to Figures 4-6.

Some additive manufacturing methods make use of a supporting bed, for example a bed of powder which is applied layer by layer and selectively fused or sintered to form a component. In such example methods, the bed of powder supports the product as it is formed, and so it is possible to manufacture components having features which are not initially directly supported from below by another feature of the component.

In contrast, in selective deposition additive manufacturing, material is deposited on previously-formed or deposited portions of the component, to progressively build a component along a build direction (which may be substantially vertical) in a self-supporting manner. In certain examples, selective deposition additive manufacturing may be conducted on a tool configured to support portions of a component which would not otherwise be self-supporting, or support arms may be incorporated into the component which can later be removed. In selective deposition additive manufacture, material can be deposited so that newly-deposited material overhangs the supporting material by a limited extent. Such newly-deposited material is said to overhang by an overhang angle, typically measured from the vertical.

The applicant has found that, in order to reliably and accurately manufacture a self-supporting structure in selective deposition additive manufacturing, an overhang angle of an overhanging part should be no more than 60° from the vertical axis (i.e. at least 30° from the horizontal plane). The applicant has found that the surface finish of the component may be affected by the overhang angle of the component, such that a smaller overhang angle from the vertical axis generally results in a better surface finish. The surface finish will affect the life of the component, therefore it is important to select a suitable surface finish for the life of the component. For a component which will endure high stresses, a smaller angle from the vertical axis may be required in order to have an acceptable surface finish and therefore an acceptable life. For a component which will endure lower stresses, a larger angle from the vertical axis may be allowable. However, the angle from the vertical axis should not exceed 60°.

In the particular example of manufacture of the seal carrier 60, described below, the maximum overhang angle is approximately 45°-55° from the build direction, which itself is substantially vertical.

Before the deposition of material commences to form the component, the orientation of the component to be manufactured is defined with respect to the build direction. The orientation of a component which is yet to be manufactured can be defined with respect to its coordinate system. In the case of a semi-annular component, the coordinate system can be defined with respect to the axial direction and the radial direction. Since the component to be manufactured is semi-annular, it has first and second angular ends. In the example manufacturing method to be described below, the build direction for additive manufacture is not aligned with a radial direction or axial direction, but instead the build direction is oriented such that the component is manufactured substantially from a first angular end towards a second angular end, as will be described below.

Figures 7A and 7B show an example orientation of the component 60 as partially-formed with respect to a build direction 98 for additive manufacture. Figure 7A shows a cross-sectional view of the component through a plane normal to the axial direction, whereas Figure 7B shows a view of the component along the radial direction at a first angular end (the lower end in Figures 7A and 7B). In both drawings, the component 60 is partially-formed on a workpiece 94 received on a bed 90, as will be described in detail below.

In this particular example, the build direction for additive manufacture is substantially vertical, and the coordinate system for the component 60 to be manufactured is oriented so that the build direction 98 lies in a plane normal to the central axis 11, and is orthogonal (i.e. at 90°) with respect to the radial direction at a first end of the component. Accordingly, the coordinate system of the component is oriented so that a first build location of the component to be formed (i.e. where material is initially fused) corresponds to a radial slice of the first angular end of the component. Therefore, the build direction is substantially tangential with the circumferential direction at the first build location. As shown in Figure 7A, owing to the semi-annular profile of the component the circumferential direction diverges from the build direction at subsequent build locations.

In this particular example, the lattice members 86 of the seal carrier 60 are at 90° from each other such that they define substantially square interstices. A diagonal of the interstices is aligned with the circumferential direction, and so the lattice members 86 are inclined at substantially 45° from the vertical axis at the start of the build process.

Similarly, it may be desirable to limit the extent to which the boundary of the openings 88 of the of the example seal carrier 60 are inclined by more than 60° from the vertical axis. The use of elliptical openings 88 in which the major axis is in the circumferential direction, as compared with circular openings, generally has the effect of inclining the tangential direction around the boundary of the opening towards the vertical direction, and thereby limits the proportion of the boundary of the openings 88 having a shallow overhang angle. Similarly, using quadrilateral openings 88 where one of the diagonals is in the circumferential direction enables shallow overhang angles (i.e. angles of more than 60° from the vertical) to be prevented.

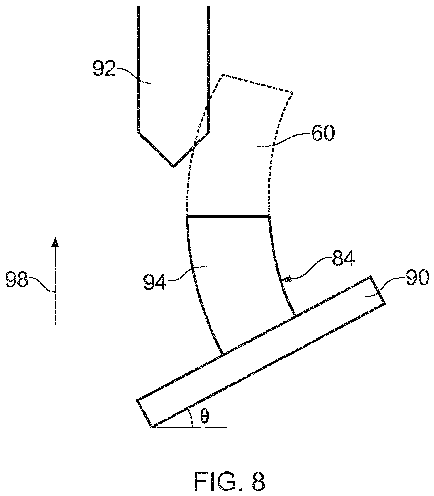

Figure 8 shows an alternative example orientation of the component to be manufactured relative the build direction 98. In this example the build direction 98 is substantially vertical and the coordinate system for the component is oriented so that the circumferential direction at the first angular end of the component is inclined with respect to the build direction. In particular, a bed 90 carrying the workpiece 94 on which the component is to be formed is tilted at an angle θ relative the horizontal, which in this example is 18°, and the component is oriented so that the circumferential direction curves towards the vertical as the component is manufactured. Accordingly, in this example the build direction lies in a plane normal the central axis of the component and is inclined with respect to the radial direction at the first angular end of the component by approximately 72°. In this particular example, the component 60 has an angular extent of 18°, and so the build direction will be substantially tangential to the circumferential direction (orthogonal with respect to the radial direction) at the second angular end of the component.

It will be appreciated that, in the case of the seal carrier 60, the elongate direction of the lattice members are inclined by 45° with respect to the vertical when the circumferential direction is aligned with (i.e. tangential with) the build direction (i.e. when the build direction is at 90° with respect to the radial direction), and may be inclined by more than 45° with respect to the vertical when the build direction is inclined with respect to the circumferential direction (i.e. when the build direction is greater or less than 90° with respect to the radial direction).

As shown in Figures 7A, 7B and 8, a starting workpiece 94 is provided for selective deposition additive manufacture in order that a melt pool may be formed in which to fuse metal powder. In this particular example the starting workpiece is a rectangular metal workpiece received on a bed 90.

To begin material deposition, a laser head 92 directs a laser at a first build location on the workpiece 94, so that the laser heats the first build location on the workpiece 94 and forms a melt pool. It then injects a small amount of metal powder 96 into the melt pool which melts and solidifies when the laser moves to the next build location. As such, the seal carrier 60 is built up by adding metal 96 to form successive layers at successive build locations.

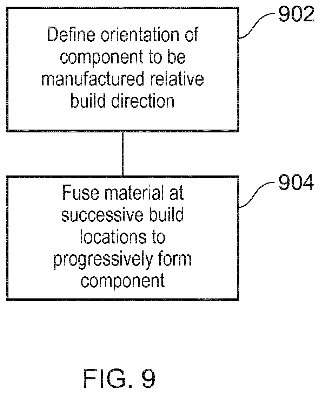

Figure 9 shows a flow chart for the process of manufacturing a semi-annular component with a self-supporting lattice structure. In block 902, the orientation of the component to be manufactured is defined relative the build direction, as described above. In block 904, material is fused at successive build locations to progressively form the component along the build direction.

It will be appreciated that the build locations may be defined automatically based on a geometry of the component to be manufactured. Further, it will be appreciated that the component to be manufactured, and the orientation of the component with respect to the build direction, may be based on an assessment of overhang angles during manufacture of the component, particular overhang angles of members of the lattice.

In particular, it will be appreciated that the minimum overhang angle of a lattice member may be achieved when the build direction is aligned with the circumferential direction (i.e. orthogonal to the radial direction) at the respective build location. For example, where a lattice structure has lattice members defining substantially square interstices in a diamond pattern, the minimum overhang angle may be 45°. Accordingly, the degree to which an overhang angle of a lattice member deviates (increase) from the minimum overhang angle may be a function of the angular extent of a component, and may increase as the angular extent of a component increases.

Further, it will be appreciated that a lattice structure may have a configuration of quadrilaterals other than square, such as a rhombic arrangement. In particular, a rhombic arrangement in which the axial extent of each rhombus is less than the circumferential extent may result in a minimum overhang angle of less than 45°. Such arrangements may be selected to mitigate excessive deviation from the minimum overhang angle, such as in components having a large angular extent.

Whilst a particular example of the above method has been described with respect to a seal carrier for a gas turbine engine, it will be appreciated that the method is applicable to the manufacture of other semi-annular components. In particular, the method can be used to manufacture other semi-annular components for a gas turbine, such as seal carriers for other parts of a gas turbine, intermediate and high pressure shroud seal segments, or any semi-annular component with a lattice structure.

It will be understood that the invention is not limited to the embodiments described above and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A method of manufacturing a semi-annular component for a casing arrangement of a gas turbine by additive manufacture, the component having a lattice structure and, in use, extending circumferentially about a central axis of the gas turbine so that a radial direction extends towards the central axis, the method comprising:
fusing material at successive build locations along a build direction to progressively form the component so that members of the lattice structure have an elongate direction having a circumferential component;
wherein the build direction lies in a plane substantially normal to the central axis; and
wherein the build direction is inclined with respect to the radial direction at each build location so that members of the lattice structure are progressively formed along their elongate direction.

2. A method according to claim 1, wherein the build direction is inclined with respect to the radial direction at each build location by an angle of between 45° and 90°

3. A method of manufacturing a semi-annular component according to claim 1 or 2, wherein the semi-annular component is formed by selective deposition additive manufacture.

4. A method of manufacturing a semi-annular component according to any of claims 1-3, wherein fusing material comprises selectively melting a surface of a metal substrate using a radiation source to form a melt pool on the surface and selectively depositing metal powder into the melt pool to progressively form the component.

5. A method of manufacturing a semi-annular component according to any preceding claim, wherein the build direction is substantially vertical and configured with respect to the component so that the members of the lattice structure are inclined with respect to vertical axis by no more than 30°.

6. A method of manufacturing according to any preceding claim, wherein the members of the lattice structure are arranged in a quadrilateral configuration to define quadrilateral interstices, and wherein a diagonal of each quadrilaterial interstice is aligned with the circumferential direction.

7. A seal carrier (60) for a casing arrangement (24) of a gas turbine engine comprising a casing structure (30) and a shroud seal segment (34), the seal carrier (32) comprising:
a casing attachment point (62) for coupling the seal carrier (60) with a casing structure (30);
a carrier arm (66;68) configured to extend radially inwardly from the casing structure (30) to support a shroud seal segment (34);
wherein the casing attachment point (62) is axially spaced apart from the carrier arm (66;68); and
a semi-annular lattice structure (84) extending between the casing attachment point (64) and the carrier arm (66), the lattice structure (84) comprising a plurality of elongate members (86) each extending along a respective elongate direction having a circumferential component.

8. A seal carrier according to claim 7, wherein the seal carrier (60) further comprises a radially outer barrier plate (70) for insulating the casing from an axial gas flow through the seal carrier.

9. A seal carrier according to claim 8, wherein the barrier plate (70) comprises a plurality of openings (88) to allow a gas flow through the seal carrier (60) to the casing.

10. A seal carrier according to claim 9, wherein at least one opening (88) is elliptical with a minimum aspect ratio of 2:1 and wherein the major axis of each elliptical opening is in the circumferential direction of the seal carrier (60); and/or
wherein each opening (88) is quadrilateral, and wherein a diagonal of the quadrilateral is substantially aligned with the circumferential direction.

11. A seal carrier according to any of claim 7-10, wherein the casing attachment point (62) is an intermediate casing attachment point disposed between a forward and an aft portion of the barrier plate (70), or the seal carrier additionally comprises such an intermediate casing attachment point.

12. A seal carrier according to claim 11, wherein the barrier plate (70) comprises a continuous portion circumferentially adjacent to the intermediate casing attachment point (62), the continuous portion extending between the forward and aft portions and having a substantially constant radius.

13. A seal carrier according to any of claims 6-12, wherein the lattice structure (84) has substantially the same circumferential extent as the seal carrier (60).

14. A seal carrier according to any of claims 6-13, wherein the members (86) of the lattice structure (84) are arranged in a quadrilateral configuration to define quadrilateral interstices.

15. A casing arrangement for a gas turbine engine comprising:
a casing structure (30), a shroud seal segment (34) and a seal carrier (60) in accordance with any of claims 11-15;
the casing structure (30) having a carrier attachment point cooperating with the intermediate casing attachment point of the seal carrier (60) so that the seal carrier (60) depends from the casing structure (30);
a recess (76) in the barrier plate (70) for accommodating the carrier attachment point (62) of the casing structure (30);
wherein the axial extent of the recess (76) is no more than 130% of the axial extent of the carrier attachment point (62) of the casing.
